# EUROPEAN PATENT SPECIFICATION

(11) **EP 1 574 691 B1**
(45) Date of publication and mention of the grant of the patent: **15.05.2013**
(21) Application number: 05003949.4
(22) Date of filing: 23.02.2005
(51) Int. Cl.: F02D 41/02, F02D 43/00, F02B 37/24

(54) **Control apparatus and control method for gasoline engine with an adjustable nozzle mechanism turbocharger**
Vorrichtung und Verfahren zur Steuerung eines Benzinmotors mit einem Turbokompressor mit verstellbaren Leitschaufeln
Dispositif et méthode de commande d'un moteur à essence muni d'un turbocompresseur à buse variable

(30) Priority: 10.03.2004 JP 2004067970
(43) Date of publication of application: 14.09.2005
(73) Proprietor: TOYOTA JIDOSHA KABUSHIKI KAISHA, Toyota-shi, Aichi-ken, 471-8571 (JP); DENSO CORPORATION, Kariya-city, Aichi-pref. 448-8661 (JP)
(72) Inventor: Irisawa, Yasuyuki, Toyota-shi, Aichi-ken, 471-8571 (JP); Kubota, Hirofumi, Toyota-shi, Aichi-ken, 471-8571 (JP); Tanaka, Toshihiko, Kariya-city Aichi-pref, 448-8661 (JP)
(74) Representative: TBK

(56) References cited:
- EP-A1- 0 454 943
- EP-A1- 1 394 393
- DE-A1- 19 955 090
- JP-A- 61 283 735
- US-A- 5 996 347

## Description

### BACKGROUND OF THE INVENTION

### 1. Field of the Invention

The invention relates to a gasoline engine with an adjustable nozzle mechanism turbocharger. More particularly, the invention relates to a gasoline engine with an adjustable nozzle mechanism turbocharger provided with an exhaust gas control apparatus.

### 2. Description of the Related Art

It is well known that typically in gasoline engines provided with an exhaust gas control apparatus such as a catalyst, emissions may deteriorate from unburned hydrocarbons (HC) going unprocessed due to purification performance not being at its fullest when the engine is cold. In particular, in gasoline engines provided with a supercharger such as a turbocharger, there is a large amount of heat loss at the supercharger, which adversely affects the ability of the exhaust gas control apparatus to warm up. Thus, various proposals have been made that have been aimed at quickly warming up the exhaust gas control apparatus during a cold start of the engine.

For example, Japanese Patent Application Laid-Open No. JP-A-61-283735 discloses a control apparatus for an engine with an exhaust turbo supercharger provided with a quick warm-up control device and a correcting device in an engine provided with an adjusting device which adjusts the area of an exhaust gas introduction passage to a turbine according to the operating state of the engine. Here, when the exhaust gas control apparatus is cold, the quick warm-up control device performs an ignition timing retard correction and the correcting device operates the adjusting device to increase the area.

Although not a gasoline engine, Japanese Patent Application Laid-Open No. JP-A-2001-227395 discloses a turbo diesel engine with an adjustable nozzle mechanism which, when the engine is not yet warmed up, controls the cross-section area of the nozzle so that it is smaller for a predetermined period of time after engine start-up than it is when the engine is cranking, and then increases after the predetermined period of time has passed.

Just how to reduce the amount of unburned HC when the engine is cold is a large problem. In order to reduce the amount of unburned HC, it is desirable to increase the temperature of the exhaust combustion gas in the engine while also increasing the period of time that the exhaust combustion gas is retained in the exhaust passage so that the unburned HC oxidizes. Although the technology described in Japanese Patent Application Laid-Open No. JP-A-61-283735 does increase the temperature of the exhaust combustion gas by performing ignition timing retard correction when the exhaust gas control apparatus is cold, however, it also operates the adjusting device to increase the area. As a result, the period of time that the exhaust combustion gas is retained in the exhaust passage is not sufficiently long. As a result, oxidization of the unburned HC, and furthermore, warming up of the exhaust gas control apparatus, is not performed quickly (early) enough.

### SUMMARY OF THE INVENTION

In view of the foregoing problems, this invention thus provides a control apparatus and a control method for an engine with an adjustable nozzle mechanism turbocharger, which enable an exhaust gas control apparatus to be warmed up quickly and improve both fuel efficiency and torque shock that occurs when warm-up control is cancelled.

A control apparatus for a gasoline engine provided with an adjustable nozzle mechanism turbocharger and an exhaust gas control apparatus according to one aspect of the invention is characterized in that, when the exhaust gas control apparatus is cold, an ignition timing is retard-controlled and an opening amount of the adjustable nozzle is controlled toward a closed side.

According to the first aspect of the invention, the temperature of the exhaust combustion gas increases and, at the same time, so does the back pressure. As a result, the period of time that the high temperature exhaust combustion gas is retained in the exhaust passage increases, thus promoting post-combustion of the unburned HC. As a result, the exhaust gas control apparatus warms up quickly, thereby suppressing deterioration of the emissions.

Here, the opening amount of the adjustable nozzle is preferably controlled such that the back pressure increases as the retard amount by the retard control increases.

As a result, since the intake air amount corresponds to the retard amount, it is possible to both improve fuel efficiency when the retard amount is small, and suppress deterioration of the emissions when the retard amount is large.

Further, the opening amount of the adjustable nozzle is preferably controlled so that the back pressure becomes equal to, or less than, a predetermined value.

As a result, it is possible to soften torque shock which is generated by engine output torque when the ignition timing retard control is cancelled.

Moreover, when the ignition timing retard control ends when the exhaust gas control apparatus has warmed up, the opening amount of the adjustable nozzle is preferably controlled so that the back pressure is reduced prior to the end of that ignition timing retard control.

As a result, it is possible to soften the torque shock which is generated by the engine output torque when the ignition timing retard control is cancelled.

A control method for a gasoline engine provided with an adjustable nozzle mechanism turbocharger and an exhaust gas control apparatus according to another aspect of the invention is characterized in that, when the exhaust gas control apparatus is cold, an ignition timing is retard-controlled and an opening amount of the adjustable nozzle is controlled toward a closed side.

### BRIEF DESCRIPTION OF THE DRAWINGS

The above-mentioned objects, features, advantages, technical and industrial significance of this invention will be better understood by reading the following detailed description of preferred embodiments of the invention, when considered in connection with the accompanying drawings, in which:
FIG. 1 is a system diagram schematically illustrating a control apparatus for a gasoline engine provided with an adjustable nozzle mechanism turbocharger to which the invention can be applied;
FIG. 2 is a flowchart illustrating first and second examples of a control mode according to the control apparatus of this invention;
FIG 3 is a graph showing the relationship between the engine coolant temperature and the retard amount;
FIG 4 is a graph showing a target VN opening amount for improving emissions and fuel efficiency used in the first example of the control mode;
FIG 5 is a graph showing experimentation results of the relationship between the back pressure and the amount of unburned HC discharged;
FIG 6A is a graph showing a VN opening amount that enables the torque shock generated when the retard control is cancelled to be softened, and FIG 6B is a graph showing a target VN opening amount for both improving emissions and fuel efficiency and softening the torque shock generated when the retard control is cancelled, used in the second example of the control mode;
FIG 7 is a flowchart illustrating a third example of the control mode according to the control apparatus of the invention; and
FIG 8A is a time chart showing the amount of torque shock generated when the retard control is cancelled and the adjustable nozzle is returned to "fully open" simultaneously, and FIG 8B is a time chart showing the amount of torque shock generated when the retard control is cancelled after first waiting until the intake air amount has become equal to, or less than, a predetermined value after the adjustable nozzle has been returned to "fully open".

### DETAILED DESCRIPTION OF THE PREFERRED EMBODIMENTS

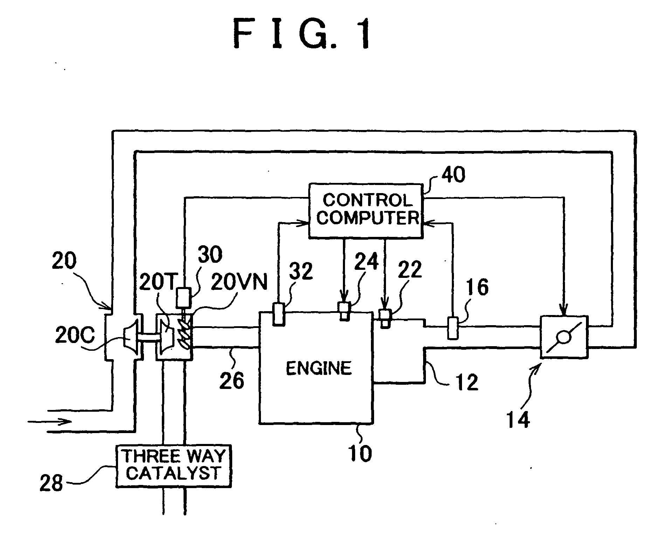

In the following description, the present invention will be described in more detail in terms of exemplary embodiments with reference to the accompanying drawings. FIG 1 is a system diagram schematically illustrating a control apparatus of a gasoline engine provided with an adjustable nozzle mechanism turbocharger to which the invention can be applied.

For the intake system of an engine 10, an intake manifold is connected to intake ports. A throttle chamber 14, in which is disposed a throttle valve, is connected to the intake manifold via a surge tank 12 where intake passages of each cylinder come together. The throttle valve is driven by a throttle motor. Downstream of the throttle chamber 14 is provided an intake air amount detection sensor 16 for detecting the intake air amount. A compressor 20C of an adjustable nozzle mechanism turbocharger 20 is provided in the intake passage upstream of the throttle chamber 14. A fuel injection valve 22 is provided directly upstream of the intake port of each cylinder, and a spark plug 24 is provided in the cylinder head of each cylinder.

Meanwhile, for the exhaust system of the engine 10, exhaust gases combine in an exhaust manifold which is connected to exhaust ports. An exhaust passage 26 is connected to the exhaust manifold. A turbine 20T of the adjustable nozzle mechanism turbocharger 20 is disposed in the exhaust passage 26, and a three way catalyst 28 is provided downstream of this turbine 20T. The turbocharger 20 supercharges by using energy from the exhaust gas introduced into the turbine 20T to drive a compressor 20C to draw in air and boost the pressure, and has an adjustable nozzle 20VN, which serves as a flow rate adjusting mechanism, in an inlet nozzle portion of the turbine 20T. This adjustable nozzle 20VN is driven into one of three positions, "fully closed", "fully open", or a middle position between the two, by an adjustable nozzle operating actuator 30 which is constructed of an electric actuator such as a direct current motor, for example. In the description in this specification, when the adjustable nozzle is referred to as being "fully closed", it is referring to a state in which the nozzle is closed to the smallest flow path area by adjustable vanes which form the adjustable nozzle. Similarly, when the adjustable nozzle is referred to as being "fully open", it is referring to a state in which the nozzle is open to the maximum flow path area by the adjustable vanes which form the adjustable nozzle.

The engine 10 is also provided with a speed sensor (not shown) for detecting the speed of the engine 10 and an accelerator opening amount sensor (also not shown) for detecting a load (i.e., the accelerator opening amount). In addition, a coolant temperature sensor 32 for detecting a coolant temperature of the engine 10 and a pressure sensor (not shown) used for controlling the boost pressure are also provided. Outputs from the speed sensor, the accelerator opening amount sensor, the coolant sensor 32, and the pressure sensor are sent to a control unit 40 constructed of a microcomputer and the like.

The control unit 40 controls the fuel injection amount, ignition timing, and pressure boost and the like according to the output values sent by the sensors. Optimum values obtained through experimentation for the required characteristics and the like of the engine 10 are set as the control values used for controlling the fuel injection amount, the ignition timing, and the pressure boost and the like on maps showing the operating state of the engine 10, in which the vertical axis is represented by the engine load and the horizontal axis is represented by the engine speed, for example. These maps are stored in a table in the control unit 40.

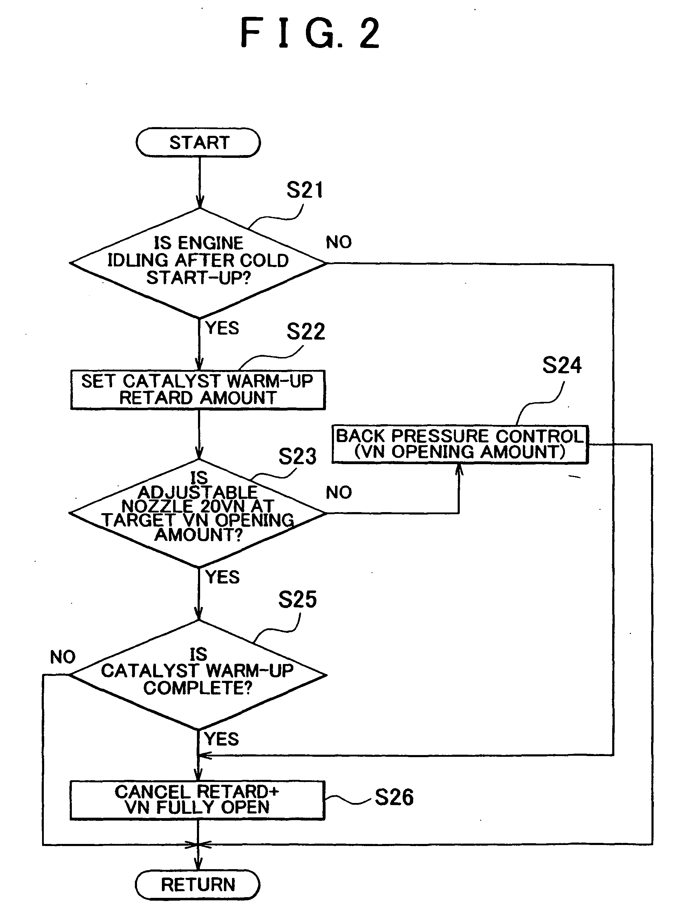

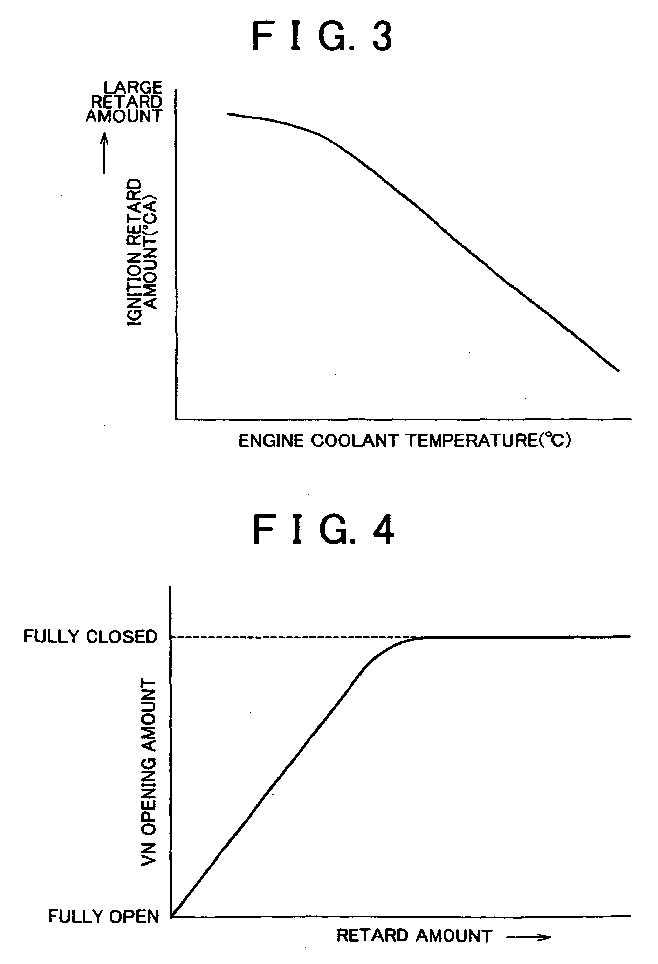

Here, a first example of a control mode of the control apparatus for the engine 10 with an adjustable mechanism turbocharger of the invention of the structure described above will now be described with reference to the flowcharts and graphs and the like in FIGS. 2 and thereafter. First, when the control starts, it is determined in step S21 whether the engine 10 is idling after a cold start. More specifically, it is determined that the engine 10 is idling after a cold start when the temperature of the engine coolant, which is detected by the coolant temperature sensor 32, and the engine speed are equal to, or less than, respective predetermined values. If it is determined in step S21 that the engine 10 is idling after a cold start, i.e., YES in step S21, the control flow proceeds on to step S22 where the ignition timing is set to a retard amount for warming up the catalyst. This ignition retard amount is set so that the retard amount (shown by the crank angle °CA) increases the lower the engine coolant temperature (°C), as shown in the graph in FIG. 3. The control flow then proceeds on to step S23 where it is determined whether the adjustable nozzle 20VN is at a target VN opening amount for improving emissions and fuel efficiency. If the adjustable nozzle 20VN is already at the target VN opening amount, i.e., YES in step S23, the control flow proceeds on to step S25.

If, on the other hand, the adjustable nozzle VN is not at the target VN opening amount, i.e., NO in step S23, the control flow proceeds on to step S24 where control is performed to adjust the adjustable nozzle 20VN to the target VN opening amount (denoted as "VN opening amount" in FIG 2) and increase the back pressure. The target VN opening amount for improving emissions and fuel efficiency is set so that the opening amount of the adjustable nozzle 20VN becomes smaller as the ignition retard amount from the retard control increases, and becomes "fully closed" past a predetermined ignition retard amount, i.e., so that the back pressure increases, as shown in FIG 4. In this way, it is possible to both improve the fuel efficiency when the retard amount is small and suppress deterioration of emissions when the retard amount is large by controlling the adjustable nozzle 20VN gradually toward the closed side as the retard amount increases, without fully closing it, when the retard amount is small, i.e., when there is not a great need to warm up the catalyst. This is because the intake air amount is normally small when the retard amount is small since the intake air amount corresponds to the retard amount in order to maintain a predetermined output torque in the engine.

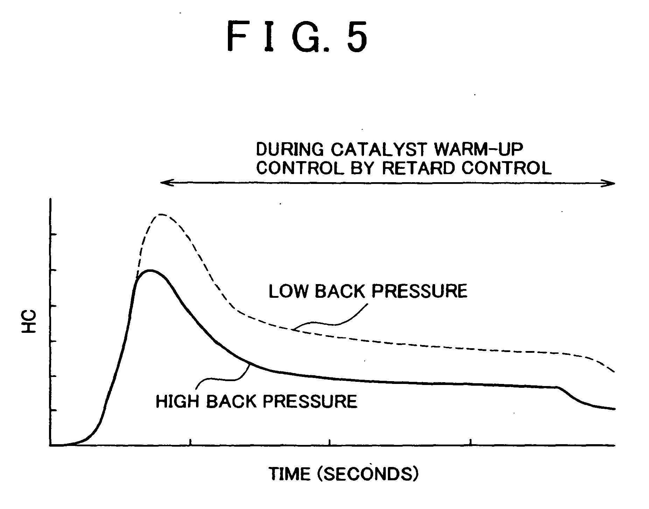

FIG. 5 shows experimentation results of the relationship between the back pressure and the amount of unburned HC discharged in catalyst warm-up control by the ignition retard control. The solid line in the drawing shows a case in which the back pressure is high and the broken line shows a case in which the back pressure is low. As can be seen from the drawing, when the back pressure is increased, the amount of unburned HC discharged decreases, thereby improving emissions.

Returning to the flowchart in FIG. 2 again, it is then determined in step S25 whether the catalyst has completed warming up. This determination is made based on whether an accumulated value of the intake air amounts detected by the intake air amount detection sensor 16 is greater than a predetermined value. More specifically, the ignition retard amount is controlled so as to decrease gradually, as shown in the graph in FIG 3, as the engine coolant temperature increases over time after the engine 10 is started up. The heat quantity applied to the three way catalyst 28 is estimated by cumulating all of the intake air amounts for the predetermined ignition retard amount that has changed gradually, and from this estimation it is determined whether the catalyst has completed warming up. The cumulative intake air amount for this determination is obtained beforehand by experiment, and is stored in a table of the control unit 40 as a map value. Unless the catalyst has completed warming up, control is continued to adjust the adjustable nozzle 20VN to the closed side or to "fully closed" and increase the back pressure.

If, on the other hand, it is determined in step S21 that the engine 10 is not idling after a cold start, i.e., NO in step S21, and it is also determined in step S25 that the catalyst has completed warming up, i.e., YES in step S25, the control flow proceeds on to step S26 where the ignition timing retard control is cancelled and the adjustable nozzle 20VN is set to "fully open" (denoted as "VN fully open" in FIG 2), after which the control routine ends.

The second example of the control mode will now be described with reference to the same flowchart in FIG 2 as well as the related graphs. The second example of the control mode differs from the first only with respect to the setting of the target VN opening amount in step S23, which is described below. Therefore, only this point will be described, i.e., redundant explanations will be omitted.

In the second example of the control mode, the target VN opening amount in step S23 in FIG 2 is set for not only improving emissions and fuel efficiency, but also for softening the torque shock generated by the engine output torque when the ignition timing retard control is cancelled. That is, the target VN opening amount for also softening the torque shock when the ignition timing retard control is cancelled is set such that beyond a predetermined retard amount, the opening amount of the adjustable nozzle 20VN opens gradually from "fully closed" as the retard amount further increases. As described above, the intake air amount corresponds to the retard amount in order to maintain a predetermined output torque, and therefore, when the retard amount increases, so does the intake airamount. However, if the opening amount of the adjustable nozzle 20VN is kept "fully closed" even after the retard amount increases beyond the predetermined value, the pressure boost also increases. Therefore the target VN opening amount is set as described above to soften the torque shock during take-off of the vehicle in this state (i.e., when the pressure boost is high). As can be seen from the flowchart in FIG. 2, during take-off of the vehicle, the engine 10 is not initially in an idling state so the control flow proceeds on to step S26 where the retard control is cancelled and control is performed to bring the adjustable nozzle 20VN to "fully open". However, there is a control delay with the intake air so even if a "fully open" command is output, the boost pressure still remains so torque shock is generated.

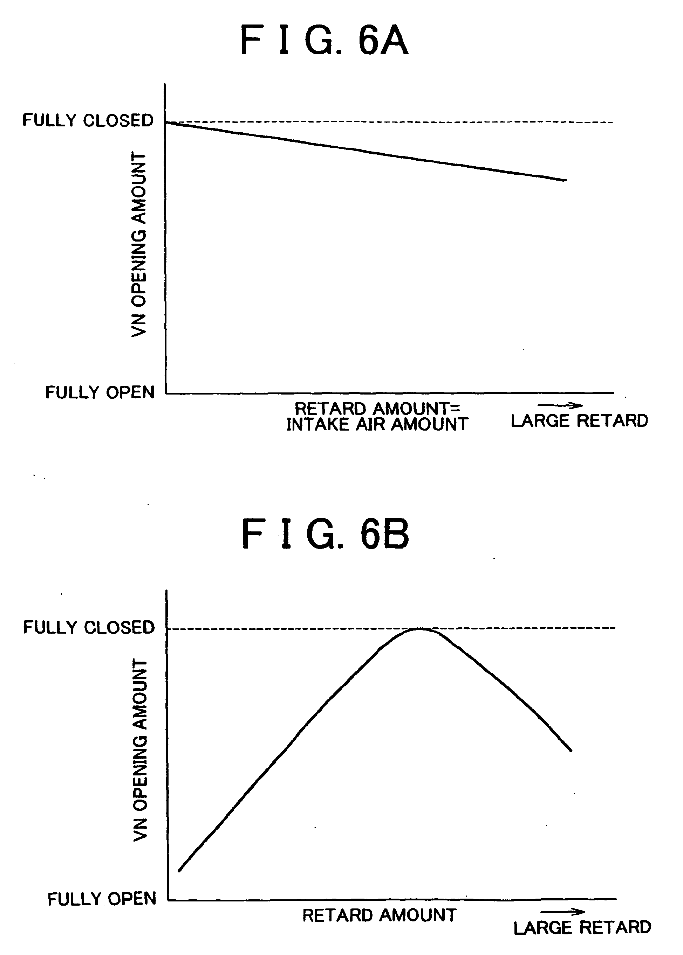

Therefore, in order to soften torque shock generated when the retard control is cancelled, it is preferable to control the adjustable nozzle 20VN to open gradually from "fully closed" as the retard amount increases, i.e., as the intake air amount increases, as shown in FIG. 6A, and bring the back pressure to equal to, or less than, a predetermined value. Therefore, the target VN opening amount set as shown in FIG 4 described above and the target VN opening amount set as shown in FIG 6A are combined, and a target VN opening amount, shown in FIG 6B, for both improving emissions and fuel efficiency and softening the torque shock generated by the engine output torque when the ignition timing retard control is cancelled is set. In this way, with a mode in which the opening amount of the adjustable nozzle 20VN is controlled so that the back pressure becomes equal to, or less than, a predetermined value, as shown in FIG 6B, it is possible to soften the torque shock generated by the engine output torque when the ignition timing retard control is cancelled.

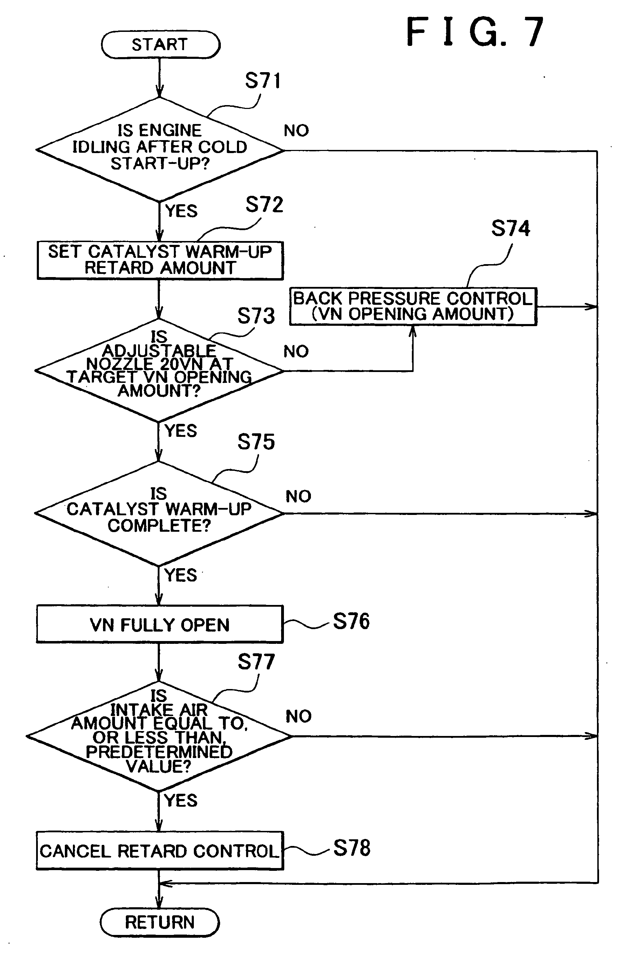

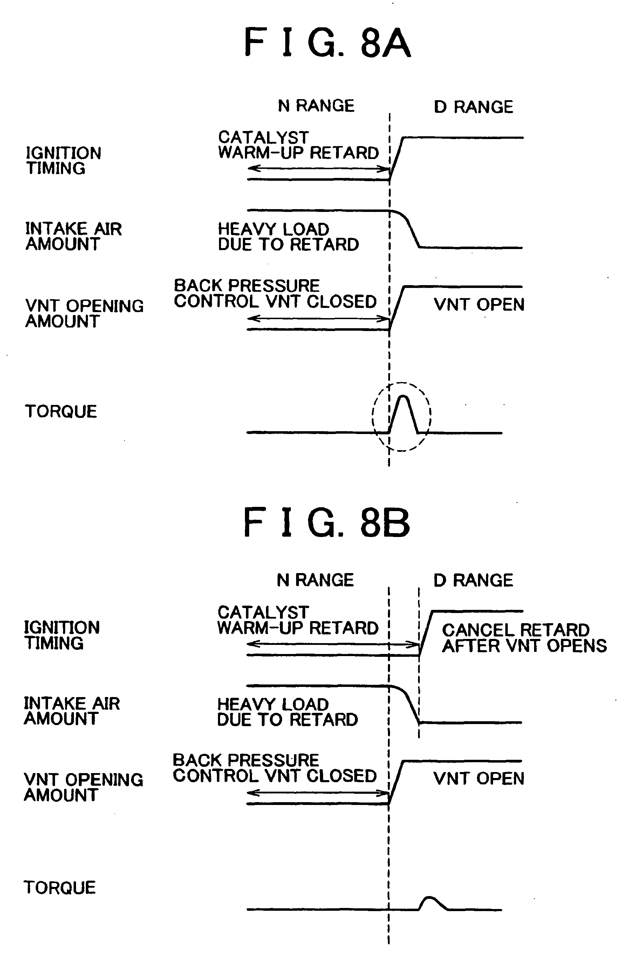

Next, a third example of the control mode of the control apparatus for the engine 10 with an adjustable nozzle mechanism turbocharger of this invention will be described with reference to the flowchart in FIG 7 and the time charts in FIGS. 8A and 8B. The third example of the control mode may be used in place of the second example described above. Accordingly, since the steps S71 to S75 in the flowchart in FIG. 7 are the same steps S21 to S25 in the flowchart in FIG. 2 of the first example described above, redundant descriptions thereof will not be repeated. In the description of the control steps after it has been determined in step S75 (i.e., step S25 in FIG 2) that the catalyst is completely warmed up, the adjustable nozzle 20VN is set to "fully open" in step S76 after step S75. The control flow then proceeds on to step S77 where it is determined whether the intake air amount is equal to, or less than, a predetermined value. If the intake air amount is not equal to, or less than, the predetermined value in step S77, the control is repeated until it becomes equal to, or less than, the predetermined value. When the intake air amount is equal to, or less than, the predetermined value in step S77, the control flow proceeds on to step S78 where the retard control is cancelled.

More specifically, as shown in FIG 8A, when the retard control is cancelled and the adjustable nozzle 20VN is returned to "fully open" at the same time, a large torque shock is generated, as shown by the circular broken line in the drawing, when the vehicle takes off with an intake air amount that has increased following the retard control as described above and a high pressure boost (a heavy load from the retard). On the other hand, as shown in FIG 8B, when the retard control is cancelled after first waiting until the intake air amount has become equal to, or less than, a predetermined value after the adjustable nozzle 20VN is adjusted to "fully open", the boost pressure drops, thus softening the torque shock. In this way, control is executed that returns the opening amount of the adjustable nozzle 20VN to "fully open", which results in a decrease in the intake air amount, and waits in that state until the intake air amount becomes equal to, or less than, a predetermined value before ending of the ignition timing retard control when that ignition timing retard control is to be ended. That decrease in the intake air amount due to the control returning the opening amount of the adjustable nozzle 20VN to "fully open" in turn results in a decrease in the back pressure, thus making it possible to soften the torque shock generated by engine output torque when the ignition timing retard control is cancelled.

## Claims

1. A control apparatus for a gasoline engine provided with an adjustable nozzle mechanism turbocharger (20) and an exhaust gas control apparatus (28), **characterized in that**:
when the exhaust gas control apparatus (28) is cold, an ignition timing is retard-controlled and
an opening amount of the adjustable nozzle (20VN) is controlled toward a closed side as a retard amount by the retard control increases toward a predetermined value and is controlled toward an open side as the retard amount becomes larger than the predetermined value by a larger amount such that a back pressure becomes equal to or less than a predetermined value.

2. The control apparatus according to claim 1, wherein, when the ignition timing retard control ends when the exhaust gas control apparatus (28) has warmed up, the opening amount of the adjustable nozzle (20VN) is controlled so that the back pressure is reduced prior to the end of that ignition timing retard control.

3. A control method for a gasoline engine provided with an adjustable nozzle mechanism turbocharger (20) and an exhaust gas control apparatus (28), **characterized in that**:
when the exhaust gas control apparatus (28) is cold, an ignition timing is retard-controlled and
an opening amount of the adjustable nozzle (20VN) is controlled toward a closed side as a retard amount by the retard control increases toward a predetermined value and is controlled toward an open side as the retard amount becomes larger than the predetermined value by a larger amount such that a back pressure becomes equal to or less than a predetermined value.

4. The control method according to claim 3, wherein, when the ignition timing retard control ends when the exhaust gas control apparatus (28) has warmed up, the opening amount of the adjustable nozzle (20VN) is controlled so that the back pressure is reduced prior to the end of that ignition timing retard control.

## Patentansprüche

1. Steuergerät für eine Benzinmaschine, die mit einem Turbolader (20) mit einstellbarem Düsenmechanismus und einem Abgassteuergerät (28) versehen ist, wobei das Steuergerät **dadurch gekennzeichnet ist, dass**:
wenn das Abgassteuergerät (28) kalt ist, eine Zündungszeitabstimmung verzögerungsgesteuert wird; und
ein Öffnungsbetrag der einstellbaren Düse (20VN) zu einer geschlossenen Seite gesteuert wird, wenn sich ein Verzögerungsbetrag durch die Verzögerungssteuerung zu einem vorbestimmten Wert hin erhöht, und zu einer offenen Seite gesteuert wird, wenn der Verzögerungsbetrag durch einen größeren Betrag größer wird als der vorbestimmte Wert, derart, dass ein Gegendruck gleich wie oder geringer als ein vorbestimmter Wert wird.

2. Steuergerät nach Anspruch 1, wobei, wenn die Zündungszeitabstimmungsverzögerungssteuerung endet, wenn das Abgassteuergerät (28) aufgewärmt ist, der Öffnungsbetrag der einstellbaren Düse (20VN) so gesteuert wird, dass der Gegendruck vor dem Ende dieser Zündungszeitabstimmungsverzögerungssteuerung verringert wird.

3. Steuerungsverfahren für eine Benzinmaschine, die mit einem Turbolader (20) mit einstellbarem Düsenmechanismus und einem Abgassteuergerät (28) versehen ist, wobei das Steuerungsverfahren **dadurch gekennzeichnet ist, dass**:
wenn das Abgassteuergerät (28) kalt ist, eine Zündungszeitabstimmung verzögerungsgesteuert wird; und
ein Öffnungsbetrag der einstellbaren Düse (20VN) zu einer geschlossenen Seite gesteuert wird, wenn sich ein Verzögerungsbetrag durch die Verzögerungssteuerung zu einem vorbestimmten Wert hin erhöht, und zu einer offenen Seite gesteuert wird, wenn der Verzögerungsbetrag durch einen größeren Betrag größer wird als der vorbestimmte Wert, derart, dass ein Gegendruck gleich wie oder geringer als ein vorbestimmter Wert wird.

4. Steuerungsverfahren nach Anspruch 3, wobei, wenn die Zündungszeitabstimmungsverzögerungssteuerung endet, wenn das Abgassteuergerät (28) aufgewärmt ist, der Öffnungsbetrag der einstellbaren Düse (20VN) so gesteuert wird, dass der Gegendruck vor dem Ende dieser Zündungszeitabstimmungsverzögerungssteuerung verringert wird.

## Revendications

1. Appareil de commande pour un moteur à essence muni d'un turbocompresseur à mécanisme de tuyère réglable (20) et d'un appareil de commande de gaz d'échappement (28), **caractérisé en ce que** :
lorsque l'appareil de commande de gaz d'échappement (28) est froid, un calage d'allumage est commandé avec retard ; et
un degré d'ouverture de la tuyère réglable (20VN) est commandé vers un côté fermé à mesure qu'un degré de retard par la commande de retard augmente vers une valeur prédéterminée et est commandé vers un côté ouvert à mesure que le degré de retard devient supérieur à la valeur prédéterminée par un degré plus important de sorte qu'une contre-pression devienne inférieure ou égale à une valeur prédéterminée.

2. Appareil de commande selon la revendication 1, dans lequel, lorsque la commande de retard de calage d'allumage se termine lorsque l'appareil de commande de gaz d'échappement (28) est réchauffé, le degré d'ouverture de la tuyère réglable (20VN) est commandé de sorte que la contre-pression soit réduite avant la fin de cette commande de retard de calage d'allumage.

3. Procédé de commande pour un moteur à essence muni d'un turbocompresseur à mécanisme de tuyère réglable (20) et d'un appareil de commande de gaz d'échappement (28), **caractérisé en ce que** :
lorsque l'appareil de commande de gaz d'échappement (28) est froid, un calage d'allumage est commandé avec retard ; et
un degré d'ouverture de la tuyère réglable (20VN) est commandé vers un côté fermé à mesure qu'un degré de retard par la commande de retard augmente vers une valeur prédéterminée et est commandé vers un côté ouvert à mesure que le degré de retard devient supérieur à la valeur prédéterminée par un degré plus important de sorte qu'une contre-pression devienne inférieure ou égale à une valeur prédéterminée.

4. Procédé de commande selon la revendication 3, dans lequel, lorsque la commande de retard de calage d'allumage se termine lorsque l'appareil de commande de gaz d'échappement (28) est réchauffé, le degré d'ouverture de la tuyère réglable (20VN) est commandé de sorte que la contre-pression soit réduite avant la fin de cette commande de retard de calage d'allumage.
